# EUROPEAN PATENT SPECIFICATION

(11) **EP 2 429 125 B1**
(45) Date of publication and mention of the grant of the patent: **12.03.2014**
(21) Application number: 11007338.4
(22) Date of filing: 08.09.2011
(51) Int. Cl.: H04L 12/24, H04W 24/00, H04L 29/08

(54) **Setting a Trap Management Object in a mobile communication device**
Konfigurierung eines verwalteten Objektes von Fallenbefehlen in einer mobilen Kommunikationsvorrichtung
Configuration d'un objet de gestion de notifications d'évènements dans un dispositif de communications mobile

(30) Priority: 08.09.2010 US 380710 P
(43) Date of publication of application: 14.03.2012
(73) Proprietor: HTC Corporation, Taoyuan County 330 (TW)
(72) Inventor: Yang, Ju-Ting, Taoyuan City Taoyuan County 330 (TW); Tseng, Yin-Yeh, Taoyuan City Taoyuan County 330 (TW)
(74) Representative: Ljungberg, Robert

(56) References cited:
- WO-A1-2006/102505
- WO-A2-2007/112108
- WO-A2-2008/048905
- OMA: "Trap Management Object For Fault/Performance Event Reporting Draft Version 1.3", INTERNET CITATION, 28 September 2004 (2004-09-28), pages 1-17, XP007904757, Retrieved from the Internet: URL:http://member.openmobilealliance.org/f tp/Public_documents/DM/2004/OMA DM-2004-0120R03-Trap-MO.zip [retrieved on 2008-05-19]
- "Diagnostics and Monitoring Trap Management Object", , 14 April 2009 (2009-04-14), XP55014618, Retrieved from the Internet: URL:http://www.openmobilealliance.org/Tech nical/release_program/docs/DiagMon/V1_0-20 110527-C/OMA-TS-DiagMonTrapMO-V1_0-2009041 4-C.pdf [retrieved on 2011-12-12]

## Description

### Background

### Field of the Invention

The application relates to a method and a related communication device used in a wireless communication system and related communication device, and more particularly, to a method of diagnostics and monitoring management and a related communication device in a wireless communication system.

### 2. Description of the Prior Art

Open Mobile Alliance (OMA) is the focal point for the development of mobile service enabler specifications, which support the creation of interoperable end-to-end mobile services. OMA drives service enable architectures and open enabler interfaces that are independent of the underlying wireless networks and platforms. OMA creates interoperable mobile data service enablers that work across devices, service providers, operators, networks, and geography. Toward that end, OMA will develop tests specifications, encourage third party tool development, and conduct test activities that allow vendors to test their implementations.

In OMA DM (Device Management) working group, DiagMon (Diagnostics and Monitoring) is defined to manage distributed, mobile wireless devices, in order to omptimize a subscriber's experience and reduce network operating costs.

The overall goal of device diagnostics and monitoring is to enable management authorities to proactively detect and repair troubles even before the users are impacted, or to determine actual or potential problems with a device when an opportunity presents itself. A management authority is an entity that has the right to perform a specific DM function on a device or manipulate a given data element or parameter.

The generic management interface for DiagMon functions can be broadly divided into two parts: the DiagMon Management Objects (DiagMonMOs) and alert message. Through this interface a server can configure or invoke the functions behind it, and retrieve results of Diagnostics or monitored information. Note that this interface framework does not present any specific function. Instead, it is intended to be used to define a wide range of DiagMon functions. For this purpose, all the different Diagnostics and Monitoring Functions will have its own MO Identifiers which is used to identify the function represented by this framework. With this identifier, the server is able to get further information of the function.

A DiagMon function is resident on DM device. The DiagMonMO makes this function remotely callable by the Diagnostics and Monitoring System. The DiagMonMO is used as the means to expose the Diagnostic and Monitoring function to the Diagnostics and Monitoring System. The DiagMonMO will provide the following management capabilities and diagnostics and monitoring operations: Invoke the Diagnostics and Monitoring functions; Stop the Diagnostics and Monitoring functions; Configure the Diagnostics and Monitoring functions for reporting, execution, etc.; Retrieves the Diagnostics and Monitoring data or the results; Notifications using the Generic Alert.

A trap is a well known concept employed in network management. It is a mechanism employed by a management authority to enable the device to capture and report events and other relevant information generated from various components of the Device, such as a protocol stack, device drivers, or applications. The Trap MO (Management Object) framework defined in this specification will be used for specific Trap Mos to be defined and uniquely identified by a Trap ID. In document "Trap Management Object For Fault/Performance Event Reporting Draft Version 1.3", pages 1-17. Open Mobile Alliance describes a framework that can be used to define Trap management objects, in which the structural template consists of tree structure, instance identifiers, description of the management sub tree, and node properties.

WO 2007/112108 A2 discloses the setting of Trap Management Objects stored in a Device Management Tree and related to radio network events reportable by a Device Management client. in a mobile device to a Device Management server.

In OMA DM Device Diagnostics and monitoring, a management authority is expected to proactively detect and repair troubles for users to provide better functionalities. Besides, DiagMon function is also expected to minimize the costly efforts of drive tests for better network planning optimization. However, In current DiagMon design, even some trap event logging and panic logging functionality are defined; they are not utilized fully and reported proactively to DM Servers.

In addition, DM clients can also collect valuable measurement reports when certain events happened to servers, which is definitely helpful for servers to provide better network coverage avoiding some undesired network defect, such as weak coverage area, coverage hole, coverage mapping.

### Summary

It is an object of the present invention to provide a method, a client and a computer program product for a diagnostics and monitoring management for a device management in wireless communication. This object can be achieved by the features of the independent claims. Further embodiments are characterized by the dependent claims.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is an exemplary architecture of a wireless communication system.

FIG.2 is a schematic diagram of an exemplary communication device.

FIG.3 is a flow chart of an exemplary process.

### Detailed Description

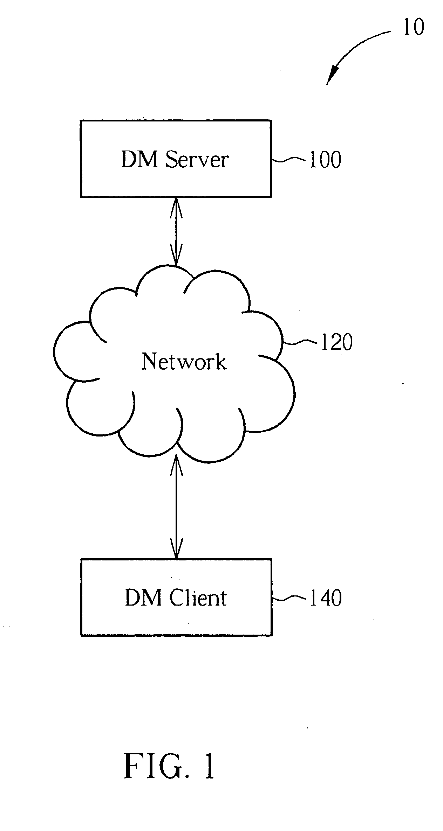

Please refer to FIG.1, which is an exemplary architecture of a wireless communication system 10. The wireless communication system 10 complies with a DM (Device Management) protocol specified by Open Mobile Alliance (OMA) DM working group. The architecture 10 includes a DM server 100, a network 120 and a DM client 140. The device management takes place by communication between the DM server 100 and the DM client 140. The DM client 140 can initiate communication. Once the communication is established between the DM server 100 and the DM client 140, a sequence of messages might be exchanged to complete a given device management task. OMA DM provides for alerts, which are messages that can occur out of sequence, and can be initiated by either server or client. Such alerts are used to handle errors, abnormal terminations etc.

The network 120 could be 3GPP (the third generation partnership project) network, such as a long-term evolution-Advanced (LTE-A) system, a HSPA+ (High Speed Packet Access Plus) system) or other mobile communication systems (e.g. LTE, WCDMA, HSPA, GSM, EDGE, etc.), considered a new radio interface and radio network architecture that provides a high data rate, low latency, packet optimization, and improved system capacity and coverage. In addition, the network 120 could be a wire line network as well.

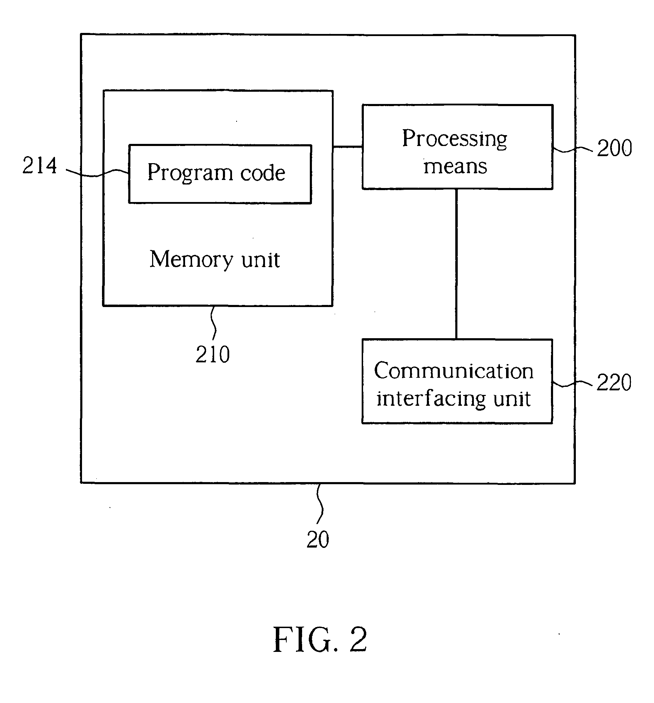

Please refer to FIG.2, which is a schematic diagram of an exemplary communication device 20. The communication device 20 can be the DM server 100 or the DM client 140 shown in FIG. 1 and may include a processing means 200 such as a microprocessor or ASIC, a memory unit 210, and a communication interfacing unit 220. The memory unit 210 may be any data storage device that can store program code 214 for access by the processing means 200. Examples of the memory unit 210 include but are not limited to a subscriber identity module (SIM), read-only memory (ROM), random-access memory (RAM), CD-ROMs, and optical data storage devices. The communication interfacing unit 220 is preferably a radio transceiver for wirelessly communicating with the network according to processing results of the processing means 200.

A Diagnostics and Monitoring (DiagMon) function performs various diagnostics and monitoring activities in order to diagnose problems, report data, or collect measurements data associated with a device, with applications on a DM device (e.g. the DM client 140), with the network 120 in which the device operates or with access to services provided by the network 120.

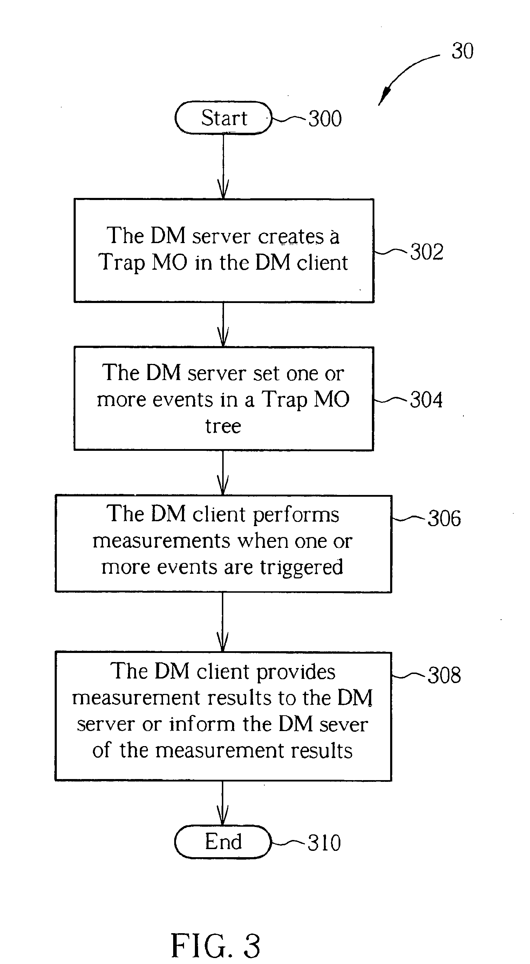

Please refer to FIG.3, which is a flow chart of an exemplary process 30. The process 30 is used for the DM server 100 and the DM client 140 in the wireless communication system 10. The process 30 can be compiled into the program code 214 and include the following steps:

Step 300: Start.

Step 302: The DM server 100 creates a Trap MO in the DM client 140.

Step 304: The DM server 100 set one or more events in a Trap MO tree.

Step 306: The DM client 140 performs measurements when one or more events are triggered.

Step 308: The DM client 140 provides measurement results to the DM server 100 or inform the DM sever 100 of the measurement results.

Step 310: End.

According to the process 30, the Trap MO is involved. The DM server 100 creates the Trap MO in the DM client 140, for example in a memory of the DM client 140. The DM server 100 sets one or more events in the Trap MO tree of the Trap MO. For example, one or more event set in the Trap MO tree could be an unstable radio frequency (RF) environment even ( such as: an abrupt SIR drop event , poor air condition including poor RSSI, RSCP, SIR event) /an event of consecutive radio link control (RLC) unrecoverable errors/a radio link failure event. When one or more events are triggered, the DM client 140 performs the measurements. The DM client 140 provides the measurement results to the DM server 100 or informs the DM sever 100 of the measurement results. If the DM client 140 informs the DM server 100 of the measurement results, the DM server 100 can decide whether to request the measurement results from the DM client 140. In other words, when the RF environment of the network 120 is not stable(is poor) or when the network 120 has radio link failure, one or more events will be triggered. Meanwhile, the DM client 140 performs the measurements and provides the measurement results to the DM server 100 or informs the DM sever 100 of the measurement results. If the DM client 140 informs the DM server 100 of the measurement results, the DM server 100 can decide whether to request the measurement results from the DM client 140.After the DM server 100 gets the measurement results, the DM server 100 can make use of the measurement radio information to provide better network coverage to reduce possible radio link failure.

Preferably, the DM client 140 performs the measurement by requesting a modem. The modem is connected to the DM client, performing the measurements. Then, the DM client 140 obtains the measurement results from the modem and sends the measurement results to the DM server 100.

The DM client 140 can provide the measurement results by establishing a DM session with the DM server 100. In some examples, the DM client 140 sends a generic alert to the DM server 100 to notify the DM server 100 of the measurement results. Then the DM server 100 can decide whether to request the measurement results from the DM client 140. Also, the DM client 140 sends the generic alert to the DM server 100 to notify a radio link failure. In some examples, the DM client 140 can interact with a user by popping up a message to ask the user whether the user wants to provide the DM server 100 with the measurement results. With the useful measurement results collected, the DM server 100 can provide better network coverage to reduce possible radio link failure.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processing means 200 processes the program code 214 related to the abovementioned processes and the processed results can handling diagnostics and monitoring management in the wireless communication system 10.

To sum up, the DM server firstly creates the Trap MO in the DM client 140, and then sets one or more events in the Trap MO tree of the Trap MO. When one or more events are triggered, the DM client performs measurements. The DM client 140 provides the measurement results to the DM server 100 or informs the DM sever 100 of the measurement results. If the DM client 140 informs the DM server 100 of the measurement results, the DM server 100 can decide whether to request the measurement results from the DM client 140. After the DM server gets the measurement results, the DM server 100 can provide better network coverage to reduce possible radio link failure.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of diagnostics and monitoring management for a device management, DM, client in a wireless communication system, the wireless communication system being complied with a DM protocol specified by Open Mobile Alliance DM working group, the method comprising:
having at least one event, by a DM client, in a Trap management object, MO, tree in the DM client;
performing measurements, by the DM client, when the at least one event is triggered;
providing measurement results, by the DM client, to a DM server or informing
the DM server of the measurement results; the method being **characterized in that** it further comprises the step of :
popping up a message to a user, wherein the message indicates to the user
whether to send the measurement results to the DM server;
wherein the at least one event comprises at least one of an unstable radio frequency, RF, environment event, an event of consecutive radio link control, RLC, unrecoverable errors
and a radio link failure event.

2. The method of claim 1, wherein providing the measurement results to the DM server comprises sending the measurement results by establishing a DM session with the DM server.

3. The method of claim 1 further comprising sending a generic alert to the DM server to notify the DM server of the measurement results.

4. The method of claim 1, wherein performing the measurement comprises requesting a modem to perform the measurement.

5. The method of claim 4 further comprising obtaining the measurement results from the modem.

6. A device management, DM, client for diagnostics and monitoring management in a wireless communication system, the wireless communication system being complied with a DM protocol specified by Open Mobile Alliance DM working group, the DM client comprising:
means for having at least one event in a Trap management object, MO, tree; and
means for performing measurements when the at least one event is triggered;
means for providing measurement results to a DM server or informing the DM
sever of the measurement results; the DM client being **characterized in that** it further comprises:
means for popping up a message to a user, wherein the message indicates to the
user whether to send the measurement results to the DM server;
wherein the at least one event comprises at least one of an unstable radio
frequency, RF, environment event, an event of consecutive radio link control, RLC, unrecoverable errors and a radio link failure event.

7. The DM client of claim 6, wherein providing the measurement results to the DM server comprises sending the measurement results by establishing a DM session with the DM server.

8. The DM client of claim 6 further comprising means for sending a generic alert to the DM server to notify the DM server of the measurement results.

9. The DM client of claim 6, wherein performing the measurement comprises requesting a modem to perform the measurement.

10. The DM client of claim 6 further comprising means for obtaining the measurement results from the modem.

11. A computer program product having instructions which, when executed by a computer, controls the computer to perform a method of any of claims 1 to 5.

## Patentansprüche

1. Ein Verfahren zur Diagnose- und Überwachungsverwaltung für einen Geräteverwaltungsclient (DM-Client - Device Management Client) in einem drahtlosen Kommunikationssystem, wobei das drahtlose Kommunikationssystem einem DM-Protokoll, spezifiziert durch die DM-Arbeitsgruppe der Open Mobile Alliance, entspricht, wobei das Verfahren Folgendes beinhaltet:
Aufweisen von mindestens einem Ereignis, durch einen DM-Client, in einem Trap-Verwaltungsobjekt-Baum (MO-Baum - Management Object Tree), in dem DM-Client;
Durchführen von Messungen durch den DM-Client, wenn das mindestens eine Ereignis ausgelöst wird;
Bereitstellen von Messergebnissen durch den DM-Client gegenüber einem DM-Server oder Informieren des DM-Servers über die Messergebnisse; wobei das Verfahren **dadurch gekennzeichnet ist, dass** es ferner den folgenden Schritt beinhaltet:
Einblenden einer Nachricht gegenüber einem Benutzer, wobei die Nachricht dem Benutzer anzeigt, ob die Messergebnisse an den DM-Server gesendet werden sollen;
wobei das mindestens eine Ereignis mindestens eines der Folgenden beinhaltet: ein instabiles Radiofrequenz-Umgebungsereignis (RF-Umgebungsereignis), ein Ereignis konsekutiver Funkverbindungssteuerung (RLC - Radio Link Control), irreparable Fehler und ein Funkverbindungsfehlerereignis.

2. Verfahren gemäß Anspruch 1, wobei das Bereitstellen der Messergebnisse gegenüber dem DM-Server das Senden der Messergebnisse durch das Eröffnen einer DM-Sitzung mit dem DM-Server beinhaltet.

3. Verfahren gemäß Anspruch 1, das ferner das Senden einer generischen Warnung an den DM-Server beinhaltet, um den DM-Server über die Messergebnisse zu verständigen.

4. Verfahren gemäß Anspruch 1, wobei das Durchführen der Messung das Anfordern eines Modems zum Durchführen der Messung beinhaltet.

5. Verfahren gemäß Anspruch 4, das ferner das Erhalten der Messergebnisse von dem Modem beinhaltet.

6. Ein Geräteverwaltungsclient (DM-Client) zur Diagnose- und Überwachungsverwaltung in einem drahtlosen Kommunikationssystem, wobei das drahtlose Kommunikationssystem einem DM-Protokoll, spezifiziert durch die DM-Arbeitsgruppe der Open Mobile Alliance, entspricht, wobei der DM-Client Folgendes beinhaltet:
Mittel zum Aufweisen von mindestens einem Ereignis in einem Trap-Verwaltungsobjekt-Baum (MO-Baum - Management Object Tree), und Mittel zum Durchführen von Messungen, wenn das mindestens eine Ereignis ausgelöst wird;
Mittel zum Bereitstellen von Messergebnissen gegenüber einem DM-Server oder
Informieren des DM-Servers über die Messergebnisse; wobei der DM-Client **dadurch gekennzeichnet ist, dass** er ferner Folgendes beinhaltet:
Mittel zum Einblenden einer Nachricht gegenüber einem Benutzer, wobei die Nachricht dem Benutzer anzeigt, ob die Messergebnisse an den DM-Server gesendet werden sollen;
wobei das mindestens eine Ereignis mindestens eines der Folgenden beinhaltet: ein instabiles Radiofrequenz-Umgebungsereignis (RF-Umgebungsereignis), ein Ereignis konsekutiver Funkverbindungssteuerung (RLC - Radio Link Control), irreparable Fehler und ein Funkverbindungsfehlerereignis.

7. DM-Client gemäß Anspruch 6, wobei das Bereitstellen der Messergebnisse gegenüber dem DM-Server das Senden der Messergebnisse durch das Eröffnen einer DM-Sitzung mit dem DM-Server beinhaltet.

8. DM-Client gemäß Anspruch 6, der ferner das Senden einer generischen Warnung an den DM-Server beinhaltet, um den DM-Server über die Messergebnisse zu verständigen.

9. DM-Client gemäß Anspruch 6, wobei das Durchführen der Messung das Anfordern eines Modems zum Durchführen der Messung beinhaltet.

10. DM-Client gemäß Anspruch 6, der ferner Mittel zum Erhalten der Messergebnisse von dem Modem beinhaltet.

11. Ein Computerprogrammprodukt, das Befehle aufweist, die, wenn durch einen Computer ausgeführt, den Computer steuern, um ein Verfahren gemäß den Ansprüchen 1 bis 5 durchzuführen.

## Revendications

1. Un procédé de gestion de diagnostics et de surveillance pour un client de gestion de dispositif, DM, dans un système de communication sans fil, le système de communication sans fil étant mis en conformité avec un protocole DM spécifié par le groupe de travail Open Mobile Alliance de DM, le procédé comprenant le fait :
d'avoir au moins un événement, par le biais d'un client DM, dans un arbre d'objets de gestion, MO, de piégeage, dans le client DM ;
d'effectuer des mesures, par le biais du client DM, lorsque cet au moins un événement est déclenché ;
de fournir des résultats de mesures, par le biais du client DM, à un serveur DM ou
d'informer le serveur DM des résultats de mesures ; le procédé étant **caractérisé en ce qu'**il comprend de surcroît l'étape consistant à :
faire apparaître un message à l'intention d'un utilisateur, le message indiquant à l'utilisateur s'il doit envoyer les résultats de mesures au serveur DM ;
dans lequel cet au moins un événement comprend au moins un élément parmi une fréquence radio instable, RF, un événement environnemental, un événement de contrôle de liaison radio consécutive, RLC, des erreurs irrécupérables et un événement de défaillance de liaison radio.

2. Le procédé de la revendication 1, dans lequel le fait de fournir les résultats de mesures au serveur DM comprend l'envoi des résultats de mesures en établissant une session DM avec le serveur DM.

3. Le procédé de la revendication 1 comprenant de surcroît l'envoi d'une alerte générique au serveur DM pour aviser le serveur DM des résultats de mesures.

4. Le procédé de la revendication 1, dans lequel le fait d'effectuer la mesure comprend la demande à un modem d'effectuer la mesure.

5. Le procédé de la revendication 4 comprenant de surcroît le fait d'obtenir du modem les résultats de mesures.

6. Un client de gestion de dispositif, DM, pour la gestion de diagnostics et de surveillance dans un système de communication sans fil, le système de communication sans fil étant mis en conformité avec un protocole DM spécifié par le groupe de travail Open Mobile Alliance de DM, le client DM comprenant :
un moyen pour avoir au moins un événement dans un arbre d'objets de gestion, MO,
de piégeage ; et
un moyen pour effectuer des mesures lorsque cet au moins un événement est déclenché ;
un moyen pour fournir des résultats de mesures à un serveur DM ou pour informer le serveur DM des résultats de mesures ; le client DM étant **caractérisé en ce qu'**il comprend de surcroît :
un moyen pour faire apparaître un message à l'intention d'un utilisateur, le message indiquant à l'utilisateur s'il doit envoyer les résultats de mesures au serveur DM ;
dans lequel cet au moins un événement comprend au moins un élément parmi une fréquence radio instable, RF, un événement environnemental, un événement de contrôle de liaison radio consécutive, RLC, des erreurs irrécupérables et un événement de défaillance de liaison radio.

7. Le client DM de la revendication 6, dans lequel le fait de fournir les résultats de mesures au serveur DM comprend l'envoi des résultats de mesures en établissant une session DM avec le serveur DM.

8. Le client DM de la revendication 6 comprenant de surcroît un moyen pour envoyer une alerte générique au serveur DM pour aviser le serveur DM des résultats de mesures.

9. Le client DM de la revendication 6, dans lequel le fait d'effectuer la mesure comprend la demande à un modem d'effectuer la mesure.

10. Le client DM de la revendication 6 comprenant de surcroît un moyen pour obtenir du modem les résultats de mesures.

11. Un produit programme informatique ayant des instructions qui, lorsqu'elles sont exécutées par un ordinateur, contrôlent l'ordinateur de façon à mettre en oeuvre un procédé de n'importe lesquelles des revendications 1 à 5.
